Europäisches Patentamt

European Patent Office

Office européen des brevets

(19)

(11) Publication number: **0 169 572**
**A2**

(12) **EUROPEAN PATENT APPLICATION**

(21) Application number: **85109400.3**

(22) Date of filing: **26.07.85**

(51) Int. Cl.⁴: **A 47 B 96/20**
**E 04 C 2/36**

(30) Priority: **26.07.84 DK 3661/84**

(43) Date of publication of application:
**29.01.86 Bulletin 86/5**

(84) Designated Contracting States:
**BE DE GB NL SE**

(71) Applicant: **D-Display A/S**
**Vestergade 22**
**DK-8860 Ulstrup(DK)**

(72) Inventor: **Pedersen, Soren**
**Bosbrovej 141**
**DK-8870 Langaa(DK)**

(72) Inventor: **Andersen, Bent**
**Tranesvej 12, Stevnstrup**
**DK-8870 Langaa(DK)**

(74) Representative: **Prüfer, Lutz H., Dipl.-Phys.**
**Harthauser Strasse 25d**
**D-8000 München 90(DE)**

(54) A panel and a fame structure for such a panel.

(57) A panel, which is especially suited for building shelves and stands for sales and exhibition purposes, toy houses, children's furniture, etc., comprises a rigid frame structure (10) and a cover (11, 12) of board or cardboard, preferably corrugated board, which is tightly folded around the frame structure. The frame structure (10), which is preferably moulded from plastic and shaped like a grid or grate, is provided with fastening means (18) along its rim portion. These fastening means are adapted to releasably fastening the panel to one or more corresponding panels. These fastening means (18) which may be of the snap fastener type, may comprise studs or sockets, which may be interconnected by means of separate connecting elements (24).

Fig. 1

EP 0 169 572 A2

Croydon Printing Company Ltd.

# A PANEL COMPRISING AN INNER, RIGID FRAME STRUCTURE AND A PAIR OF OUTER WALLS

The present invention relates to a panel comprising an inner, rigid frame structure and a pair of outer walls covering opposite first and second sides of the frame structure.

Such panels having a frame structure made from plastic, wood, metal, or the like and outer walls made from plywood, sheet metal, wood, plasterboard, etc., are long well-known as building elements and as other structural elements. In these known panels, the covering walls are permanently fastened to the frame structure by suitable fastening means, such as adhesives, screws, nails, or the like. These known building elements or panels, which may be provided with releasable fastening means for interconnecting similar panels or building elements, are relatively expensive and not suited for making structures of a less permanent character, such as stands, platforms, shelves, etc., for the presentation and exhibition of merchandise in shops and exhibitions, and for other purposes where board or corrugated board is often used, such as for toy houses, children's furniture, etc.

The present invention provides a panel which is cheap to produce and well suited for the above purposes.

The panel according to the invention is of the type comprising an inner, rigid frame structure and a pair of outer walls covering opposite first and second sides of the frame structure, fastening means for releasably fastening the panel to one or more similar panels being formed on the rim portion of the frame structure, and the panel according to the invention is characterized in that said pair of opposite outer walls is formed by one or more sheets of board or cardboard folded around said frame structure so as to define overlapping, interconnected sheet edge portions.

The frame structure around which the board or cardboard walls are folded, has a certain inherent strength contributing to the strength of the whole panel. However, the frame structure also functions as

P&V F4350 jC KEV/KWF viderefør.

a spacer element for spacing the cardboard walls arranged on opposite sides of the frame structure, and the mutual spacing of the cardboard walls substantially increases the contribution to the bending strength of the panel stemming from these walls. The inner surfaces of the cardboard walls are preferably not fastened to the frame structure, which means that the panel is a frame structure having a sheet or cover of board or cardboard tightly wrapped therearound.

Panels according to the invention may be interconnected by their releasable fastening means formed on the rim portions on their frame structures, so as to form spatial structures of the above types without using separate supports. The panels according to the invention, which are easy to assemble and disassemble, may have different peripheral shapes, and by means of a certain number of such panels it is possible to make a number of different spatial structures, which may be rather advantageous when the panels are used for structures which have to be changed now and then, such as exhibition stands, exhibition platforms, toy houses, children's furniture, shelves, etc.

When the outer surfaces of the cardboard walls, which may be coloured or otherwise decorated, have become worn or damaged after a certain time period of use, the panel may be renovated by replacing the cardboard cover surrounding the frame structure by a new cover. This means that the frame structure which normally represents the major part of the price of the panel, may be reused.

The outer cardboard walls may be formed by a single cardboard sheet which is tightly wrapped around the frame structure in a sleeve-like manner, and which has interconnected, overlapping edge portions. The sleeve-like cover may be open at opposite ends so as to expose opposite end surfaces of the frame structure. Alternatively, these end surfaces of the frame structure may be covered by foldable flaps formed on said cardboard sheet.

In a preferred embodiment each of said opposite outer walls is formed by a separate sheet of cardboard, and the rim portions of one or both of these sheets are folded around the frame structure edges so as to form overlapping sheet rim portions which are interconnected. Thus, a preferred embodiment of the panel according to the invention is characterized in that said first side of the frame structure defines a single, substantially plane first surface, which is covered by a first sheet of board, that said second side of the frame structure defines a second, substantially plane, raised central surface and a peripherally extending, substantially plane third surface, that the rim portions of said first sheet of board are folded around the edges of the frame structure and into engagement with said third surface so that the outer surface of the folded rim portions substantially flush with the raised second surface, and in that the raised second surface and the flushing surfaces of the bent rim portions are covered by a second sheet of board. The outer side surfaces of the panel formed by said first and second sheets of board may then be made completely plane.

Said sheet or sheets of board may be of any type having the desired strength and surface characteristics. However, they are preferably corrugated board.

The frame structure may be made from any material having the desired strength and weight characteristics. In the preferred embodiment, however, the frame structure is moulded from plastic material and is preferably formed like a grid or grate.

The fastening means formed on the frame structure may be of any suitable type which is able to releasably interconnect two or more panels and to transfer the necessary forces. The said fastening means may, for example, be of the snap fastener type comprising a stud-like male member and a socket-like female member defining an opening or passage. One and the same panel may then be provided with studs as well as sockets which are adapted to cooperate with sockets and studs, respectively, formed on another panel. However, it would be advantageous if all of the fastening means formed on the panels could be of a similar type so that all fastening means could, for example, be in the form of studs or in the form of sockets. This may be obtained by using separate connecting elements defining sockets when the fastening means on the panels are in the form of studs, and

P&V F4350 jC KEV/KWF viderefør.

4

0169572

forming studs, when the fastening means on the panels are in the form of sockets.

If the fastening means formed on the frame structure are in the form of studs, these studs may extend outwards from the rim surfaces of the frame structure and be adapted to be received in openings or sockets formed on another panel so that these two panels are positioned closely adjacent to each other without any undesired spacing, when they are interconnected. In the preferred embodiment, the studs or stud-like male members are positioned in recesses formed in the rim of the frame structure, and the free ends of the male members substantially flush with the adjacent rim surfaces of the frame structure. Two such panels may then be interconnected by means of the above connecting elements in such a manner that they are positioned closely adjacent to each other.

In principle, the panels according to the invention may have any desired outline. However, normally the outline of the panel is polygonal and may, for example, be in the form of a right-angled triangle, a square, a rectangle, a regular hexagon, etc. The length of the edges of the panels are then preferably chosen so as to be a multiple of a certain basic length whereby a great number of various useful spatial structures may be made.

Two panels according to the invention may be interconnected so that they are located in a common plane. In the preferred embodiment, they are adapted to be interconnected in a position in which they define an angle, preferably a right angle, therebetween. When the fastening means of the frame structure comprise stud-like male members and/or socket-like female members having their longitudinal axes extending substantially at right angles to the rim surfaces of the frame structure, it may be necessary to use separate angular connecting elements.

The invention also relates to a frame structure for a panel as that described above, and the frame structure according to the invention in characterized in that it is moulded from plastic material and shaped like a grid or grate with a polygonal outline and with a pair of opposite, substantially plane, parallel side surfaces, and in that fastening means for releasably fastening the frame structure to one or more similar frame structure(s) are provided at the rim portion of the frame structure.

The invention will now be further described with reference to the drawings, wherein,

Fig. 1 is a perspective view of a pair of panels according to the invention, which have been interconnected positioned at right angles, parts of said panels having been cut away,

Fig. 2 is a perspective view of a connecting element having socket-like female fastening members, and of corresponding stud-like male fastening members formed on the frame structure of a panel, shown in an enlarged scale, and

Fig. 3 is a perspective view of an exhibition stand composed by a number of panels according to the invention.

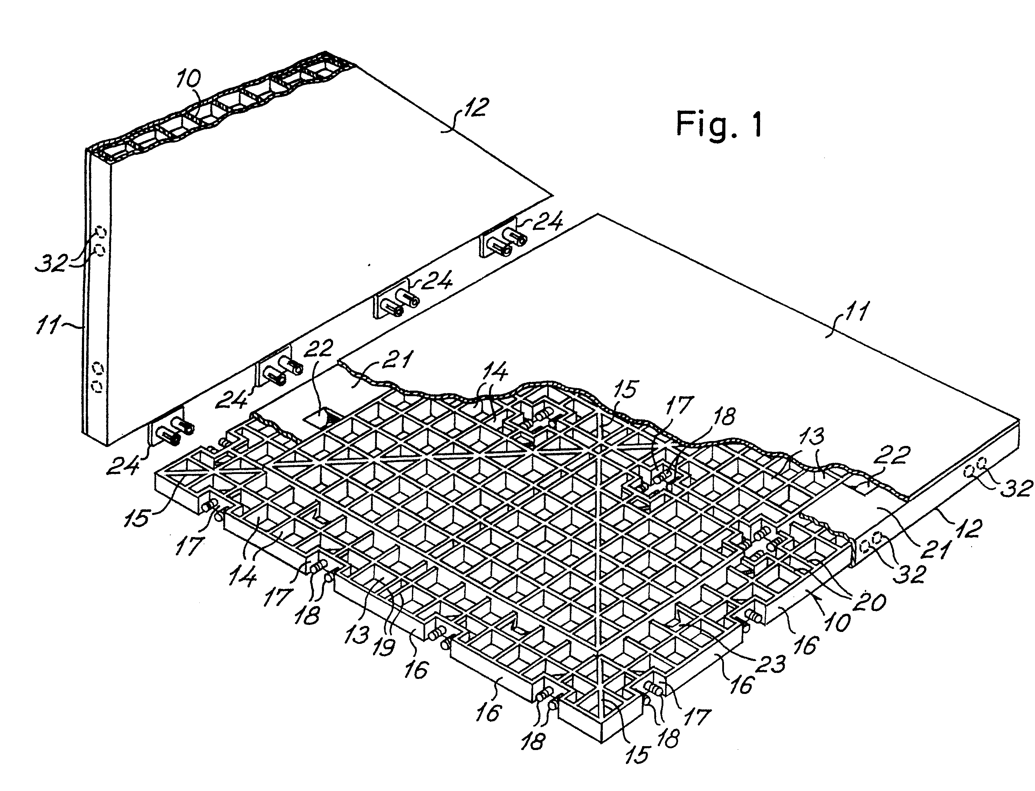

As best shown in Fig. 1, each of the panels shown in the drawings comprises a grid-like frame structure 10 and a pair of outer walls or cover plates 11 and 12 made from cardboard, preferably corrugated board, and arranged on opposite sides of the frame structure. The frame structure 10, which is preferably moulded from plastic as an integral part, comprises two sets of mutually parallel grid bars 13 and 14 and diagonally extending rigidening ribs 15. The grid bars in each set extend at right angles to the grid bars in the other set, and the outermost positioned grid bars define outer rim surfaces 16 extending between recesses 17 formed in the frame structure. Stud-like fastening means 18 extend from the bottom of each recess 17 so that the axes of the fastening means are parallel with the plane of the frame structure, and the free ends of the stud-like fastening means substantially flush with the adjacent rim surfaces 16.

One of the panels shown in Fig. 1 has a rectangular or square outline, and the associated frame structure 10 may then be adapted to be divided into two identical rectangular or into four identical square frame structures along central dividing lines defined between closely

P&V F4350 jC KEV/KWF viderefør.

adjacent pairs of grid bars 19 and 20, respectively. After any division of the frame structure along such dividing lines, the grid bars 19 and 20 will form outer rim surfaces on the new frame structures. Therefore, as shown in Fig. 1, recesses 17 with associated stud-like fastening means 18 may be formed along the grid bars 20. Although not shown in the drawings, corresponding recesses and fastening means may be formed along the grid bars 19.

Rim portions of one of the cardboard walls or cover plates 12 are folded around the rim of the frame structure 10 so that the cover plate 12 covers not only one side surface of the frame structure, but also engages with the rim surfaces 16 and the outer zones of the opposite side surface of the rim structure. As shown in Fig. 1, the thickness or height of the frame structure is reduced in these outer zones engaging with the rim portions 21 of the cardboard wall or sheet 12, so that the outer surfaces of these rim portions 21 flush with the plane abutment surface defined by the adjacent central portion of the frame structure. The cardboard wall or plate 11 has an outline corresponding substantially to the outline of the frame structure, and the rim portion of this wall or plate 11 is fastened to the rim portions 21 of the wall or plate 12 by means of an adhesive or other suitable fastening means. Thus, the combined cardboard walls or plates 11 and 12 form a cardboard cover tightly and closely surrounding the frame structure 10. As shown in Fig. 1, tabs 22 may be formed on the rim portions 21 of the cardboard plate or sheet 12. When the rim portions 21 have been folded, these tabs may be pressed into specially shaped grid openings 23, whereby the folded rim portions 21 may be retained in their folded position while the wall or sheet 11 is glued or otherwise fastened to the rim portions 21 of the opposite wall or sheet 12.

The panel according to the invention may have any desired outline, which is, however, preferably polygonal. As an example, the panel may have a square or rectangular outline or be shaped as a right-angled triangle. The length of the sides in the triangle enclosing the right angle and the side length of the rectangular and square panels are preferably equal or a multiple of the smaller of these side lengths.

P&V F4350 jC KEV/KWF viderefør.

Such a modular system makes it possible to use the same panels for building a great number of different spatial structures.

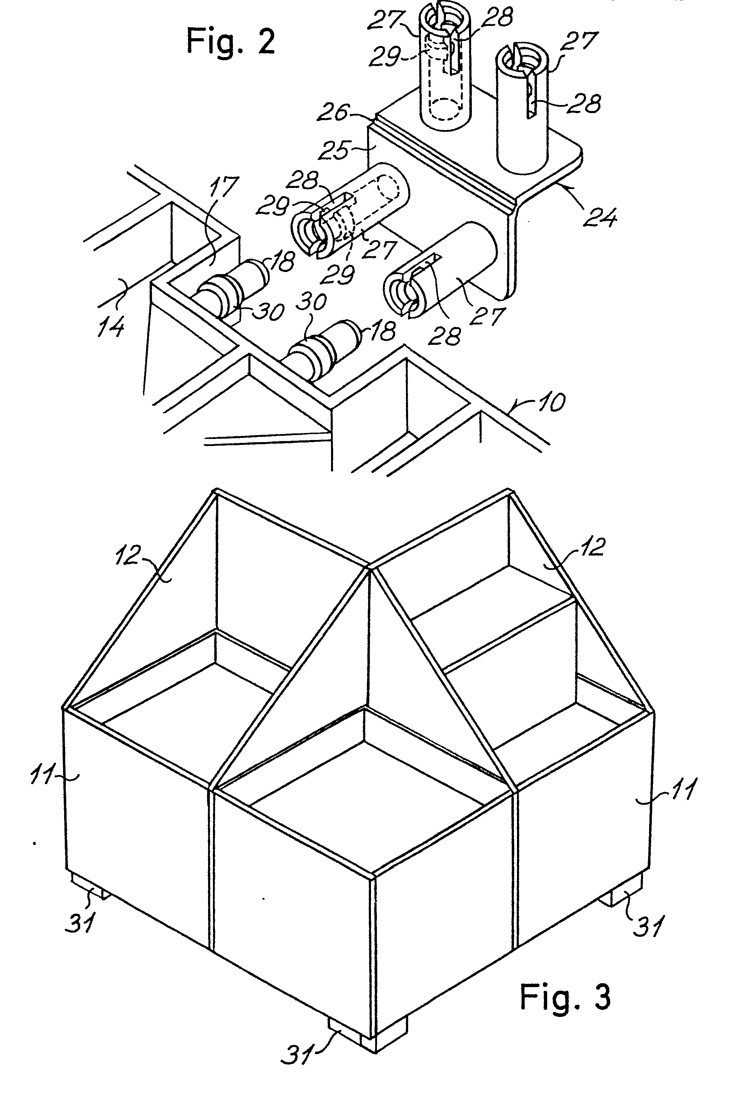

Panels of the type described above may be releasably interconnected in positions in which they extend at mutually right angles, by means of connecting elements 24 best shown in Fig. 2. Each of these connecting elements, which may be moulded from plastic an as integral part, comprises an angular plate 25 formed by webs which may be interconnected by a hinge connection 26, and sockets or sleeves 27 extending from each of these webs. Slits or slots 28 are formed in the free ends of the sockets 27, and an annular groove 29 is formed in the inner surface of each socket spaced from the free end thereof. The length of the sockets 27 corresponds to the lengths of the stud-like fastening means 18, and when two panels are to be interconnected by means of a connecting element 24, the sockets 27 on one of the webs of the connecting element are pressed into engagement with the stud-like means 18 formed on one of the panels while the sockets on the other web of the connecting element are pushed into engagement with the stud-like fastening means on the other panel as best illustrated in Fig. 2. When a socket 27 is pushed into engagement with the stud-shaped fastening means 18, an annular ridge 30 (Fig. 2) formed on each of the stud-like means 18 is received in the annular groove 29 formed in the socket so as to obtain a safe, but releasable interlocking of the socket and the stud-like fastening means. An opening may be formed in the cardboard sheet covering the rim surfaces 16 in alignment with each of the stud-like fastening means 18 or such opening may be defined by means of a circular weakening or scoring line 32.

Fig. 3 shows an exhibition stand for exhibition of goods in shops and at fairs, and this stand should only be considered an example of one of the great number of spatial structures which may be built by means of a relatively small number of differently shaped polygonal panels according to the invention. The stand shown in Fig. 3 may be provided with foot pieces 31 for supporting the stand in a position spaced above the ground or floor surface as shown in the drawing. It should be understood that other kinds and shapes of structural

P&V F4350 jC KEV/KWF viderefør.

elements could be used in combination with the panel according to the invention in order to increase the versatility of the panel according to the invention.

The releasable fastening means 18 and 24 may be replaced by other types of releasable fastening means. As an example, some of the panels may have stud-like members 18 extending beyond the rim surfaces 16 and adapted to be received in openings or bores formed in the rim surface of one or more of the other panels, or the extending stud-like members may be shaped as screws which may be passed through openings formed in the rim portions of one or more of the other panels, and adjacent panels may then be releasably fastened to each other by means of nuts cooperating with the screws.

P&V F4350 jC KEV/KWF viderefør.

1

0169572

CLAIMS

1. A panel comprising an inner, rigid frame structure (10) and a pair of outer walls (11, 12) covering opposite first and second sides of the frame structure, fastening means (18) for releasably fastening the panel to one or more similar panels being formed on the rim portion of the frame structure,
characterized in that said pair of opposite outer walls (11, 12) are formed by one or more sheets of board or cardboard folded around said frame structure so as to define overlapping, interconnected sheet edge portions.

2. A panel according to claim 1,
characterized in that said first side of the frame structure (10) defines a single, substantially plane first surface which is covered by a first sheet of board (12), that said second side of the frame structure defines a second, substantially plane, raised central surface and a peripherally extending, substantially plane third surface, that the rim portions (21) of said first sheet of board (12) are folded around the edges of the frame structure and into engagement with said third surface so that the outer surface of the folded rim portions (21) substantially flush with the raised second surface, and in that the raised second surface and the flushing surfaces of the bent rim portions are covered by a second sheet of board (11).

3. A panel according to claim 1 or 2,
characterized in that said sheet or sheets of board (11, 12) is/are corrugated board.

4. A panel according to any of the claims 1-3,
characterized in that said frame structure (10) is moulded from plastic material and is preferably formed like a grid or grate.

5. A panel according to the any of the claims 1-4,
characterized in that said fastening means comprise stud-like male members (18) and/or socket-like female members having longitudinal axes extending substantially at right angles to rim surfaces (16) of the frame structure (10).

P&V F4350 jC KEV/KWF viderefør.

6. A panel according to claim 5,
characterized in that the stud-like male members (18) are positioned in recesses (17) formed in the rim of the frame structure (10), and in that the free ends of the male members substantially flush with the adjacent rim surfaces (16) of the frame structure.

7. A panel according to any of the claims 1-6,
characterized in that the outline of the panel is polygonal.

8. A frame structure for a panel according to any of the claims 1-7,
characterized in that it is moulded from plastic material and shaped like a grid or grate with a polygonal outline and with a pair of opposite, substantially plane, parallel side surfaces, and in that fastening means (18) for releasably fastening the frame structure (10) to one or more similar frame structure(s) are provided at the rim portion of the frame structure.

9. A frame structure according to claim 8,
characterized in that said fastening means comprise stud-like male members (18) and/or socket-like female members having longitudinal axes extending substantially at right angles to rim surfaces (16) of the frame structure (10).

10. A frame structure according to claim 9,
characterized in that the stud-like male members (18) are positioned in recesses (17) formed in the rim of the frame structure (10), and in that the free ends of the male members substantially flush with the adjacent rim surfaces (16) of the frame structure.

P&V F4350 jC KEV/KWF viderefør.

Fig. 1

Fig. 2

Fig. 3